# EUROPÄISCHE PATENTSCHRIFT

(11) **EP 2 275 362 B1**
(45) Veröffentlichungstag und Bekanntmachung des Hinweises auf die Patenterteilung: **12.09.2012**
(21) Anmeldenummer: 10166884.6
(22) Anmeldetag: 22.06.2010
(51) Int. Cl.: B65G 1/02

(54) **Durchlaufregal mit einem Stützrahmen zur Befestigung einer Föderleiste**
Storage rack with a support frame for fixing a feed bar
Etagère avec une structure porteuse pour la fixation d'une baguette de transport

(30) Priorität: 17.07.2009 DE 102009027795
(43) Veröffentlichungstag der Anmeldung: 19.01.2011
(73) Patentinhaber: BITO-Lagertechnik Bittmann GmbH, 55590 Meisenheim (DE)
(72) Erfinder: Kemperdick, Arthur, 55758 Niederwörresbach (DE); Gassner, Okten, 55571 Odernheim (DE)
(74) Vertreter: Richardt Patentanwälte GbR

(56) Entgegenhaltungen:
- DE-U1- 9 003 104
- US-A1- 2003 209 401
- US-B1- 6 520 357

## Beschreibung

Die Erfindung betrifft ein Durchlaufregal mit einem Stützrahmen zur Befestigung einer Förderleiste, ein Verfahren zur Herstellung einer Förderleiste und eines Stützrahmens für ein Durchlaufregal und ein Montageverfahren für ein Durchlaufregal mit einem Stützrahmen zur Befestigung von Förderleisten.

Üblicherweise wird ein Durchlaufregal am Boden liegend fertig montiert und als ganzes Regal aufgestellt. Ein Durchlaufregal weist üblicherweise eine Aufgabeseite und eine Entnahmeseite auf. An der Entnahmeseite können die sich im Durchlaufregal befindenden Stückgüter entnommen werden. An der Aufgabeseite werden sie automatisch oder manuell in das Durchlaufregal nachgefüllt. Die Förderleisten des Durchlaufregals verlaufen von der Aufgabeseite hin zur Entnahmeseite mit einer negativen Steigung. Durch die Schwerkraft wird gewährleistet, dass die im Regal gelagerten Güter sich von der Aufgabeseite hin zur Entnahmeseite bewegen.

DE 9 003 104 U1 offenbart eine Förderleiste, die durch Laschen und Ausnehmungen auf dem Stützrahmen befestigt ist.
Der vorliegenden Erfindung liegt demgegenüber die Aufgabe zugrunde, ein Durchlaufregal zu schaffen, wobei die Förderleisten einfach hergestellt werden können.

Die der Erfindung zugrunde liegenden Aufgaben werden mit den Merkmalen der unabhängigen Patentansprüche gelöst. Ausführungsformen der Erfindung sind in den abhängigen Patentansprüchen gegeben.

Wenn im nachfolgenden "an der Entnahmeseite" oder "auf der Entnahmeseite" erwähnt wird, meint dies einen Bereich zwischen der Mitte des Durchlaufregals und der Entnahmeseite. Wenn im nachfolgenden "an der Aufgabeseite" oder "auf der Aufgabeseite" erwähnt wird, meint dies einen Bereich zwischen der Mitte des Durchlaufregals und der Aufgabeseite.

Erfindungsgemäß wird ein Durchlaufregal mit einem Stützrahmen zur Befestigung von Förderleisten geschaffen, die eine einfachere Anbringung der Förderleisten ermöglicht. Der Stützrahmen weist ein von einer Aufgabeseite zu einer Entnahmeseite verlaufendes Stützrahmenelement auf, wobei das Stützrahmenelement an der Aufgabeseite ein erstes Befestigungselement aufweist. Das erste Befestigungselement kann beispielsweise eine Lasche sein. Das erste Befestigungselement ist dabei zur Ausbildung einer formschlüssigen Verbindung mit einer der Förderleisten ausgebildet. Beispielsweise kann diese formschlüssige Verbindung durch ein Eingreifen der Lasche in eine Ausnehmung an der Förderleiste realisiert werden. Ein zweites Befestigungselement dient zur Bildung einer Klemmverbindung an der Entnahmeseite zwischen dem Stützrahmenelement und der Förderleiste.

Dadurch, dass das erste Befestigungselement des Stützrahmenelements an der Aufgabeseite eine formschlüssige Verbindung mit einer der Förderleisten bildet, wird der Einbau der Förderleisten in das Durchlaufregal vereinfacht. Es ist möglich, die Förderleiste von einer Seite in das Durchlaufregal einzuschieben und mit dem Stützrahmenelement zu verbinden. Vorzugsweise erfolgt die Befestigung der Förderleiste am Stützrahmenelement an der Aufgabeseite durch eine Lasche am Stützrahmenelement, die in eine Ausnehmung an der Förderleiste eingreift. An der Entnahmeseite erfolgt die Befestigung der Förderleiste am Stützrahmenelement vorzugsweise durch einen Clip, der eine Klemmverbindung zwischen der Förderleiste und dem Stützrahmenelement herstellt. Die Förderleiste kann also von der Entnahmeseite aus montiert werden, in dem sie von der Entnahmeseite aus zur Aufgabeseite durchgeschoben wird, wo die Lasche des Stützrahmenelements in die Ausnehmung der Förderleiste greift. An der Entnahmeseite wird die Förderleiste dann mit Hilfe des Clips am Stützrahmenelement befestigt.

Diese Art der Befestigung der Förderleiste am Stützrahmenelement ist vorteilhaft, da die Montage der Förderleisten in einem aufgestellten Regal von einer Seite erfolgen kann. Es wird so ermöglicht, die Förderleisten erst am Ende des Aufbaus des Durchlaufregals zu montieren. Dies ist vorteilhaft, da so andere Arbeiten - durch z.B. Mörtel - die Rollen nicht verschmutzen können. Auch ein Austausch der Förderleisten wird vereinfacht, da diese einfach von der Entnahmeseite aus herausgenommen werden können und durch neue Förderleisten ersetzt werden können. Im Rahmen des Aus- oder Einbaus einer Förderleiste ist es für den Monteur nicht notwendig, die Aufgabeseite des Durchlaufregals zu erreichen. Etwaige dort angebrachte automatische Nachfülleinrichtungen, können an der Aufgabeseite verbleiben, ohne dass sie die Montage der Förderleisten beinträchtigen. Auf ein Gerüst beim Anbringen oder Abmontieren der Förderleisten an der Aufgabeseite kann verzichtet werden.

Auch wenn an der Aufgabeseite keine automatische Nachfülleinrichtung angebracht ist, sind Ausführungsformen der Erfindung vorteilhaft, da die Montage der Förderleisten alleine von der Entnahmeseite aus durchgeführt werden kann. Es wird also lediglich ein Monteur benötigt, der alle Förderleisten eines Durchlaufregals von einer Seite aus montieren kann. Es ist nicht nötig, dass der Monteur sich zur Aufgabeseite begeben muss, um die Förderleisten zu montieren.

Nach Ausführungsformen der Erfindung ist das Stützrahmenelement winkelförmig ausgebildet. Dies ist vorteilhaft, da so eine höhere Stabilität gewährleistet wird.

Nach Ausführungsformen der Erfindung dient das Stützrahmenelement als Auflage für eine Förderleiste. Die Förderleiste liegt also auf dem Stützrahmenelement auf.

Nach Ausführungsformen der Erfindung weist die Förderleiste eine erste Ausnehmung an der Aufgabeseite auf. Dabei ist das erste Befestigungselement zum Eingriff in die erste Ausnehmung ausgebildet. Vorzugsweise ist das erste Befestigungselement eine Lasche am Stützrahmenelement und die erste Ausnehmung an der Förderleiste ist so ausgebildet, dass sie mit der Lasche eine formschlüssige Verbindung eingeht. Beispielsweise kann so die Förderleiste von der Entnahmeseite aus an dem Stützrahmenelement befestigt werden.

Nach Ausführungsformen der Erfindung weist die erste Ausnehmung einen vorderen Bereich auf, der in Richtung der Aufgabeseite zur Entnahmeseite verjüngend ausgebildet ist. Das erste Befestigungselement ist als eine Lasche ausgebildet. Dies ist vorteilhaft, da die Lasche mit der ersten Ausnehmung eine formschlüssige Verbindung eingeht. Dadurch, dass die erste Ausnehmung von der Aufgabeseite zur Entnahmeseite hin verjüngend ausgebildet ist, wird das Einführen der Lasche in die Ausnehmung erleichtert.

Nach Ausführungsformen der Erfindung weist das Stützrahmenelement eine zweite Ausnehmung an der Entnahmeseite auf, die zur Aufnahme eines zweiten Befestigungselements ausgebildet ist. Das zweite Befestigungselement kann beispielsweise eine Befestigungsklemme sein. Das zweite Befestigungselement wird nach Ausführungsformen der Erfindung durch die zweite Ausnehmung an der Entnahmeseite des Stützrahmenelements durchgeführt und dient zur Ausbildung einer Klemmverbindung mit der Förderleiste. Beispielsweise greift die Befestigungsklemme von unten durch das Stützrahmenelement und die Förderleiste wird von oben in die Befestigungsklemme eingeklemmt. Weitere Befestigungsklemmen können - z.B. bei Förderleisten ab einer Länge von 2m - zwischen der Aufgabe- und der Entnahmeseite angeordnet sein, um eine noch stabilere Befestigung der Förderleiste zu erreichen.

Nach Ausführungsformen der Erfindung weist das Stützrahmenelement zumindest eine weitere Lasche auf, wobei die Laschen äquidistant angeordnet sind. Jede Lasche steht dabei von einer Auflagefläche des Stützrahmenelements ab. Die Auflagefläche ist die Fläche, auf der die an dem Stützrahmenelement befestigte Förderleiste aufliegt. Eine äquidistante Anordnung identischer Laschen an dem Stützrahmenelement hat den Vorteil einer einfacheren und kostengünstigeren Herstellung. Vorzugsweise werden die Stützrahmenelemente in Form eines Endlosprofils hergestellt. In dieses Stützrahmenelement-Endlosprofil werden nun beispielsweise mit Hilfe eines Stanzwerkzeuges die Laschen gestanzt. Bei einer äquidistanten Anordnung der identischen Laschen werden die Laschen beispielsweise von dem Stanzwerkzeug regelmäßig in das Stützrahmenelement-Endlosprofil gestanzt. Später können verschieden lange Stützrahmenelemente aus dem Stützrahmenelement-Endlosprofil hergestellt werden.

Vorzugsweise weist die Förderleiste eine dritte Ausnehmung auf, in die in der Montageposition eine zweite Lasche des Stützrahmenelements ragt. Die dritte Ausnehmung hat eine Form, die sich aus der Form der ersten Ausnehmung und der gespiegelten Form der ersten Ausnehmung ergibt. Die dritte Ausnehmung in der Förderleiste ist vorteilhaft, da die zweite Lasche in sie hineinragt. Die dritte Ausnehmung ermöglicht es so, dass die Auflagefläche des Stützrahmenelements eben ist und die Förderleiste nicht auf der zweiten Lasche aufliegt. Die Form der dritten Ausnehmung ist vorteilhaft, da sich so die erste Ausnehmung und die dritte Ausnehmung durch das gleiche Werkzeug herstellen lassen. Dies kann beispielsweise ein Stanzwerkzeug sein. Dadurch, dass die dritte Ausnehmung sich aus der Form der ersten Ausnehmung und der gespiegelten Form der ersten Ausnehmung ergibt, lassen sich beide Ausnehmungen durch äquidistantes Stanzen der dritten Ausnehmung in ein Förderleisten-Endlosprofil herstellen. Hierfür wird das Förderleisten-Endlosprofil an der Stelle durchtrennt, an der die erste Ausnehmung angeordnet sein soll. Das Förderleisten-Endlosprofil wird in der Mitte einer dritten Ausnehmung durchtrennt, wodurch sich eine erste Ausnehmung ergibt. Das Ende dieser so hergestellten Förderleiste mit der ersten Ausnehmung stellt vorzugsweise das Ende der Förderleiste an der Aufgabeseite dar.

Nach Ausführungsformen der Erfindung ist eine begehbare Bühne an der Entnahmeseite des Durchlaufregals angeordnet. Eine begehbare Bühne dient üblicherweise dazu, es dem Benutzer zu ermöglichen, Güter auch aus höheren Lagerorten des Durchlaufregals zu entnehmen. Eine solche Bühne ist vorteilhaft für Ausführungsformen der Erfindung, da sie auch für die Montage der Förderleisten am Durchlaufregal genutzt werden kann. So muss kein Gerüst auf der Entnahmeseite zur Montage der Förderleisten aufgebaut werden.

Nach Ausführungsformen der Erfindung ist an der Aufgabeseite des Durchlaufregals eine automatische Zuführung angeordnet. Eine automatische Zuführung ist vorteilhaft, da sie automatisch die Güter in das Durchlaufregal nachführt. Dadurch, dass nach Ausführungsformen der Erfindung die Förderleisten lediglich von der Entnahmeseite aus montiert werden können und ein Zugang zu der Aufgabeseite nicht benötigt wird, wird die automatische Zuführung durch den Einbau oder den Ersatz der Förderleisten nicht beeinträchtigt.

Nach Ausführungsformen der Erfindung wurden die Ausnehmungen und Befestigungselemente der Förderleisten und Stützrahmenelemente ausgestanzt. Dies ist vorteilhaft, da es eine einfache und kostengünstige Herstellung der Stützrahmenelemente und Förderleisten ermöglicht. Vorzugsweise werden Förderleisten und Stüfizrahmenelemente in Form von Endlosprofilen hergestellt, in die dann die Ausnehmungen und Befestigungselemente gestanzt werden.

Nach Ausführungsformen der Erfindung sind die erste Ausnehmung und das erste Befestigungselement in einem Bereich von 5 bis 40 mm vor dem Ende des Durchlaufregals an der Aufgabeseite angeordnet.

Nach Ausführungsformen der Erfindung sind die zweite Ausnehmung und das zweite Befestigungselement in einem Bereich von 5 bis 300 mm vor dem Ende des Durchlaufregals an der Entnahmeseite angeordnet.

Nach Ausführungsformen der Erfindung ist zwischen der Entnahmeseite und der Aufgabeseite zumindest eine weitere Befestigungsklemme zur Befestigung der Förderleiste am Stützrahmenelement angeordnet. Die Befestigung der Förderleiste mit Hilfe der Befestigungsklemme am Stützrahmenelement erfolgt hier nach dem gleichen Prinzip wie an der Entnahmeseite. Die Befestigungsklemme wird durch eine Ausnehmung in dem Stützrahmenelement durchgesteckt und die Förderleiste wird in sie hinein geklemmt, sodass eine Klemmverbindung entsteht.

Nach Ausführungsformen der Erfindung ist die Förderleiste als Rollenleiste ausgebildet. Vorzugsweise besteht die Rollenleiste aus mehreren quer zur Förderrichtung angeordneten Rollen, die drehbar in einem Rollenleistenprofil gelagert sind. Stückgut kann von der Aufgabe- zur Entnahmeseite über die so angeordneten Rollen transportiert werden.

Nach Ausführungsformen der Erfindung ist die Förderleiste eine Rutschschiene. Vorzugsweise ist die Rutschschiene mit einem Kunststoff mit einem niedrigen Reibungskoeffizienten beschichtet, was ein Rutschen von Stückgut leichter möglich macht. Ferner kann beispielsweise der Reibungskoeffizient durch Gleitmittel verringert werden. Beispielsweise wird die Rutschschiene mit einer Steigung von 10-30% montiert, obwohl auch flachere oder steilere Steigungen realisiert werden können.

Nach Ausführungsformen der Erfindung weist die Förderleiste ein Förderband auf. Beispielsweise ist zumindest ein Förderband so angeordnet, dass es zum Transport von Stückgut von der Aufgabe- zur Entnahmeseite ausgebildet ist. Es ist dabei nicht notwendig aber möglich, dass das Förderband die gesamte Breite der Förderleiste einnimmt. Das Förderband kann sich aber auch nur über einen Teil der Förderleiste erstrecken. Beispielsweise weist das Förderband eine Breite von 1-10cm auf, obwohl auch kleinere oder größere Breiten realisiert werden können.

Nach Ausführungsformen der Erfindung ist die Förderleiste so ausgebildet, dass Zahnräder das Stückgut von der Aufgabe- zur Entnahmeseite transportieren. Hierzu ist eine Vielzahl von Zahnrädern an der Förderleiste angeordnet, die das Stückgut transportieren, indem sie mit ihren Zähnen von unten in das Stückgut greifen. Dadurch, dass die Zahnräder drehbar gelagert sind, kann bei einer Drehung der Zahnräder das Stückgut so von der Aufgabe- zur Entnahmeseite transportiert werden.

Eine Vielzahl weiterer Ausbildungsmöglichkeiten der Förderleiste ist denkbar. Als Förderleiste kann jegliches Mittel verstanden werden, das dazu ausgebildet ist, Stückgut von der Aufgabe- zur Entnahmeseite zu transportieren.

Eine Förderbahn für Stückgut kann aus einer einzelnen Förderleiste gebildet werden. Dies ist vorzugsweise dann der Fall, wenn die Breite des zu transportierenden Stückguts mit der Breite der Förderleiste übereinstimmt oder wenn die Breite des zu transportierenden Stückguts kleiner ist als die Breite der Förderleiste.

Eine Förderbahn für Stückgut kann aber auch aus zwei oder mehreren Förderleisten gebildet werden. Dies ist vorzugsweise dann der Fall, wenn die Breite des zu transportierenden Stückguts die Breite einer Förderleiste übersteigt

In einem weiteren Aspekt, betrifft die Erfindung ein Verfahren zur Herstellung einer Förderleiste und eines Stützrahmens für ein Durchlaufregal. Das Verfahren umfasst das Ausstanzen von äquidistanten dritten Ausnehmungen in ein Förderleisten-Endlosprofil, das Austanzen von ebenso äquidistanten zweiten Ausnehmungen und ersten Befestigungselementen in ein Stützrahmenelement-Endlosprofil. Hierbei sind vorzugsweise die Distanzen zwischen den dritten Ausnehmungen gleich den Distanzen zwischen den ersten Befestigungselementen. Dies ist vorteilhaft, da so jedes erste Befestigungselement durch eine dritte Ausnehmung hindurchgeführt werden kann. Ferner umfasst das Verfahren das Zuschneiden der Endlosprofile auf die gewünschte Länge. Dabei wird eine dritte Ausnehmung des Förderleisten-Endlosprofils an der Aufgabeseite beim Zuschneiden in der Mitte geteilt, sodass eine erste Ausnehmung entsteht. Vorzugsweise stellt dieses Ende der Förderleiste das Ende an der Aufgabeseite dar.

In einem weiteren Aspekt betrifft die Erfindung ein Montageverfahren für ein Durchlaufregal. Dabei umfasst das Montageverfahren die Montage des Stützrahmens mit Stützrahmenelementen, die Montage einer begehbare Bühne an der Entnahmeseite, das Auflegen zumindest einer Förderleiste auf ein Stützrahmenelement, das Durchschieben der Förderleiste auf dem Stützrahmenelement bis die erste Ausnehmung der Förderleiste eine formschlüssige Verbindung mit dem ersten Befestigungselement des Stützrahmenelements bildet und das Einklemmen der Förderleiste in das zweite Befestigungselement. Die Montage der Förderleiste erfolgt hierbei vorzugsweise ausschließlich über die Entnahmeseite. Durch die begehbare Bühne ist das Durchlaufregal an jeder Stelle von der Entnahmeseite aus leicht zugänglich, was die Montage der Förderleisten vereinfacht. Dadurch, dass die Förderleisten lediglich jeweils auf ein Stützrahmenelement aufgelegt werden und nach hinten zur Aufgabeseite durchgeschoben werden, wo das erste Befestigungselement mit der erste Aufnehmung der Förderleiste eine formschlüssige Verbindung eingeht, ist ein Zugang von der Aufgabeseite aus nicht nötig. Etwaige automatische Zuführungen an der Aufgabeseite müssen nicht verändert werden, wenn die Förderleisten installiert oder ersetzt werden sollen. Das Einklemmen der Förderleiste in das zweite Befestigungselement gestaltet die Installation und das Ersetzen der Förderleisten einfach und kostengünstig.

Im Weiteren werden Ausführungsformen der Erfindung mit Bezugnahme auf die Zeichnungen näher erläutert. Es zeigen:
- Figur 1: eine schematische Darstellung eines erfindungsgemäßen Durchlaufre- gals,
- Figur 2a: eine schematische Darstellung der Draufsicht auf ein erfindungsgemä- ßes Stützrahmenelement,
- Figur 2b: eine schematische Darstellung der Draufsicht auf eine erfindungsge- mäße Förderleiste,
- Figur 3: eine schematische perspektivische 3D-Darstellung eines erfindungs- gemäßen ersten Befestigungselements und einer zweiten Ausneh- mung an einem erfindungsgemäßen Stützrahmenelement,
- Figur 4: eine schematische Darstellung einer erfindungsgemäßen Befesti- gungsklemme,
- Figur 5: eine schematische Darstellung einer ersten und dritten erfindungsge- mäßen Ausnehmung in Draufsicht auf eine erfindungsgemäße Förder- leiste,
- Figur 6a: eine schematische Darstellung der Seitenansicht einer erfindungsge- mäßen Förderleiste, einer erfindungsgemäßen Befestigungsklemme und eines erfindungsgemäßen Stützrahmenelements,
- Figur 6b: eine schematische Darstellung der Seitenansicht einer erfindungsge- mäßen Förderleiste, einer erfindungsgemäßen Befestigungsklemme und eines erfindungsgemäßen Stützrahmenelements,
- Figur 6c: eine schematische Darstellung der Seitenansicht einer erfindungsge- mäßen Förderleisten, einer erfindungsgemäßen Befestigungsklemme und eines erfindungsgemäßen Stützrahmenelements,
- Figur 6d: eine schematische Darstellung der Seitenansicht einer erfindungsge- mäßen Förderleiste, einer erfindungsgemäßen Befestigungsklemme und eines erfindungsgemäßen Stützrahmenelements,
- Figur 7: eine schematische Darstellung der Vorderansicht einer erfindungsge- mäßen Förderleiste, befestigt mit einer erfindungsgemäßen Befesti- gungsklemme an einem erfindungsgemäßen Stützrahmenelement,
- Figur 8a: eine schematische Darstellung eines Teils einer Förderleiste mit einer Ausnehmung,
- Figur 8b: eine schematische Darstellung eines Teils einer Förderleiste mit einer Ausnehmung,
- Figur 8c: eine schematische Darstellung eines Teils einer Förderleiste mit einer Ausnehmung, und
- Figur 9: ein Blockdiagramm eines Verfahrens zur Montage einer erfindungs- gemäßen Förderleiste in ein erfindungsgemäßes Durchlaufregal.

Elemente der nachfolgenden Figuren, die einander entsprechen, sind mit denselben Bezugszeichen gekennzeichnet.

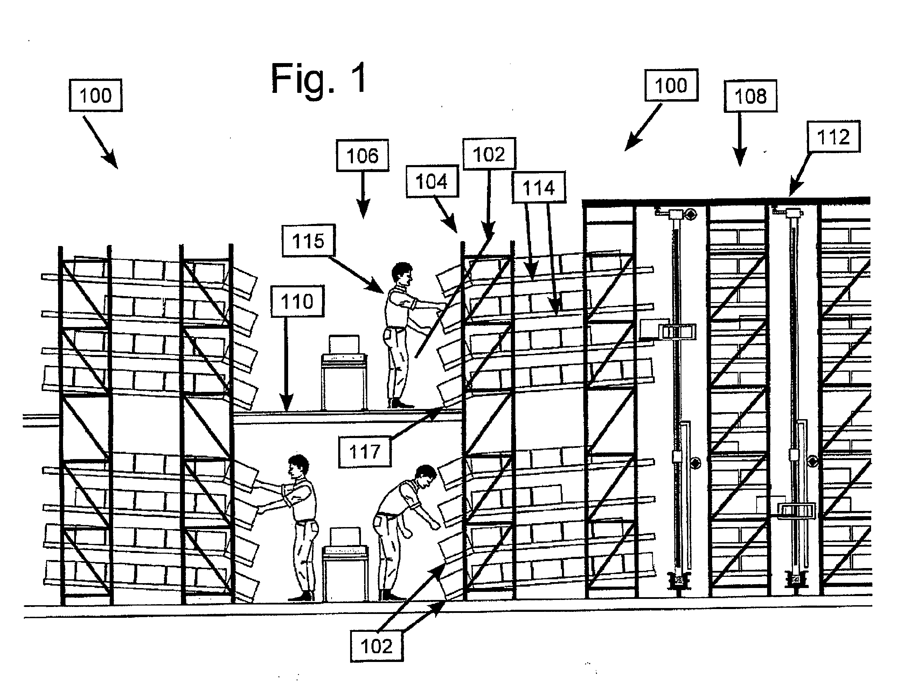

Figur 1 zeigt eine schematische Darstellung eines Durchlaufregals 100 mit mehreren erfindungsgemäßen Förderleisten 102 und mehreren erfindungsgemäßen Stützrahmen 104. Das Durchlaufregal 100 weist eine Entnahmeseite 106 und eine Aufgabeseite 108 auf. Auf der Entnahmeseite 106 befindet sich eine Bühne 110. An der Aufgabeseite 108 befindet sich eine automatische Zuführung 112. Ferner weist das Durchlaufregal 100 mehrere Stützrahmenelemente 114 auf. An der Aufgabeseite befindet sich eine automatische Zuführung 112 für die automatische Nachfüllung des Durchlaufregals 100.

Die Montage der Förderleisten 102 kann komplett von der Entnahmeseite 106 aus durchgeführt werden. Für die höheren Förderleisten kann dies von der Bühne 110 aus durchgeführt werden. Ein Zugriff auf den Stützrahmen 104 von der Aufgabeseite 108 aus, ist nicht erforderlich. Dadurch bleibt die automatische Zuführung 112 von einer Montage oder Erneuerung der Förderleisten 102 unberührt. Die Person 115 auf der Bühne 110 montiert eine Förderleiste 102 auf einem Stützrahmenelement 114. Die Förderleiste 102 wird hierfür zunächst bis hinten zur Aufgabeseite 108 durchgeschoben, wo beispielsweise eine Lasche des Stützrahmenelements 114 mit einer Ausnehmung in der Förderleiste 102 eine formschlüssige Verbindung herstellt. An der Entnahmeseite 106 wird die Förderleiste 102 mit Hilfe einer Klemmverbindung am Stützrahmenelement 114 befestigt.

An der Entnahmeseite 106 ist am Stützrahmen 104 eine Entnahmekante 117 angeordnet, die verhindert, dass Stückgüter aus dem Durchlaufregal herausfallen. Ferner wird durch die Entnahmekante 117 verhindert, dass die Förderleiste 102 nach vorne zur Entnahmeseite 106 hin von dem Stützrahmenelement 114 herunterrutscht. Hinten an der Aufgabeseite 108 ist die Förderleiste 102 also beispielsweise mit einer Lasche an dem Stützrahmenelement 114 und einer Ausnehmung in der Förderleiste 102 befestigt und vorne an der Entnahmeseite 106 wird sie durch die Entnahmekante 117 am Herausrutschen gehindert. Zwischen diesen beiden Befestigungen wird mit Hilfe eines Befestigungselements eine Klemmverbindung zwischen Förderleiste 102 und Stützrahmenelement 114 hergestellt.

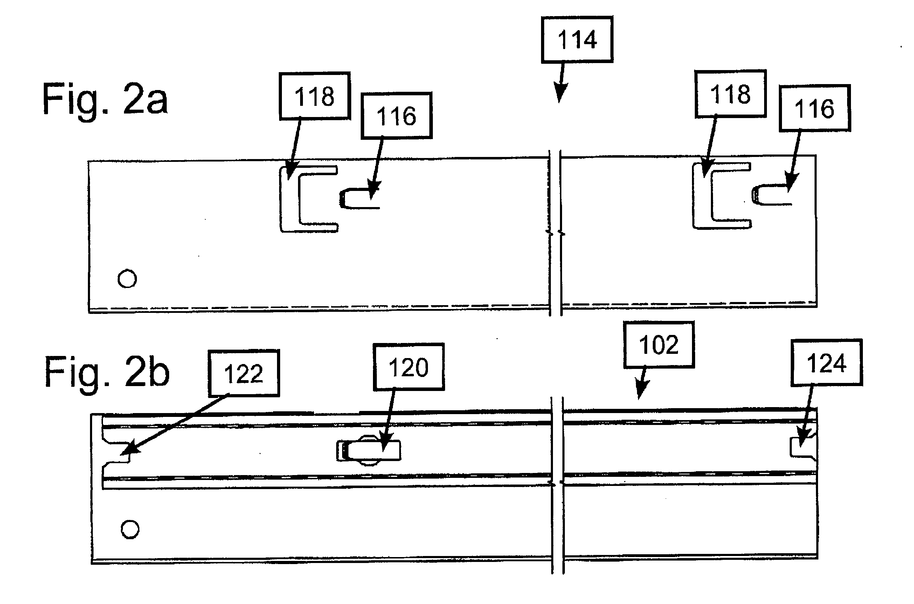

Figur 2a zeigt eine schematische Darstellung der Draufsicht auf ein erfindungsgemäßes Stützrahmenelement 114. An dem Stützrahmenelement sind Laschen 116 und Ausnehmungen 118 angeordnet. Durch die Unterbrechung in der Förderleiste 102 wird dargestellt, dass ein Abschnitt der Förderleiste 102 nicht gezeigt wird.

Figur 2b zeigt eine schematische Darstellung einer Draufsicht auf eine erfindungsgemäße Förderleiste 102. An der Förderleiste 102 sind Ausnehmungen 120, 122 und 124 angeordnet. Die Ausnehmungen 120, 122 und 124 sind jeweils ausgebildet, um eine Lasche 116 eines Stützrahmenelements 114 aufzunehmen. Die Ausnehmungen 122 und 124 befinden sich jeweils am Ende der Förderleiste 102. Sie können zur Befestigung der Förderleiste 102 an der Aufgabeseite des Durchlaufregals an dem Stützrahmenelement 114 dienen. Durch die Unterbrechung in der Förderleiste 102 wird dargestellt, dass ein Abschnitt der Förderleiste 102 nicht gezeigt wird.

Dadurch, dass sich an beiden Enden der Förderleiste 102 Ausnehmungen 122 und 124 befinden, entsteht bei der Herstellung einer solchen Förderleiste aus einem Förderleisten-Endlosprofil keinerlei Verschnitt, da das Ende mit der Ausnehmung 124 sich im Förderleisten-Endlosprofil direkt nahtlos an das Ende mit der Ausnehmung 122 anschließt.

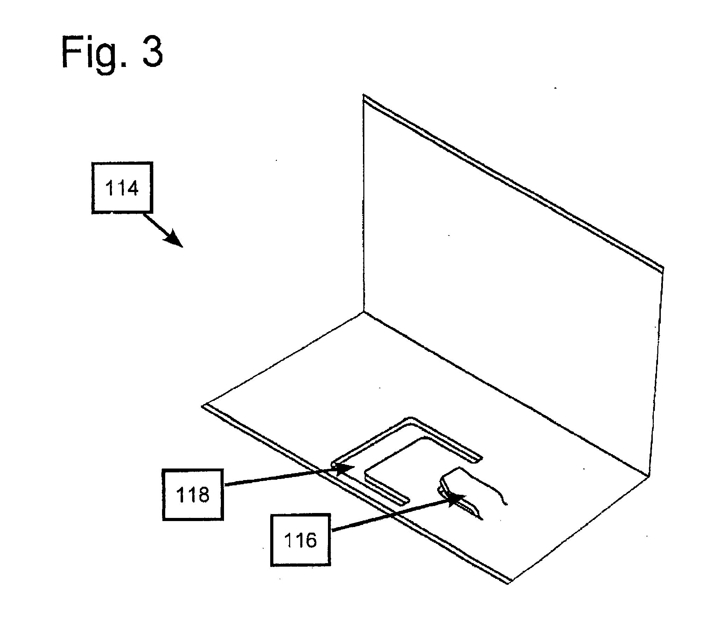

Figur 3 zeigt eine schematische perspektivische 3D-Darstellung eines Ausschnitts eines erfindungsgemäßen Stützrahmenelements 114. An dem Stützrahmenelement 114 sind eine Lasche 116 und eine Ausnehmung 118 angeordnet. Die Lasche 116 ist so ausgebildet, dass sie an der Aufgabeseite 108 eines Durchlaufregals 100 eine formschlüssige Verbindung mit einer Ausnehmung 122 an der Förderleiste eingehen kann. Die Ausnehmung 118 ist so ausgebildet, dass durch sie ein Befestigungselement 126 hindurch geführt werden kann, mit dem eine Klemmverbindung des Stützrahmenelements 114 mit einer Förderleiste hergestellt werden kann. Vorzugsweise werden die Lasche 116 und die Ausnehmung 118 immer paarweise an dem Stützrahmenelement 114 angeordnet, da sie vorzugsweise mit einem einzigen Ausstanzwerkzeug hergestellt werden. Dies ermöglicht eine einfache und kostengünstige Herstellung der Stützrahmenelemente 114.

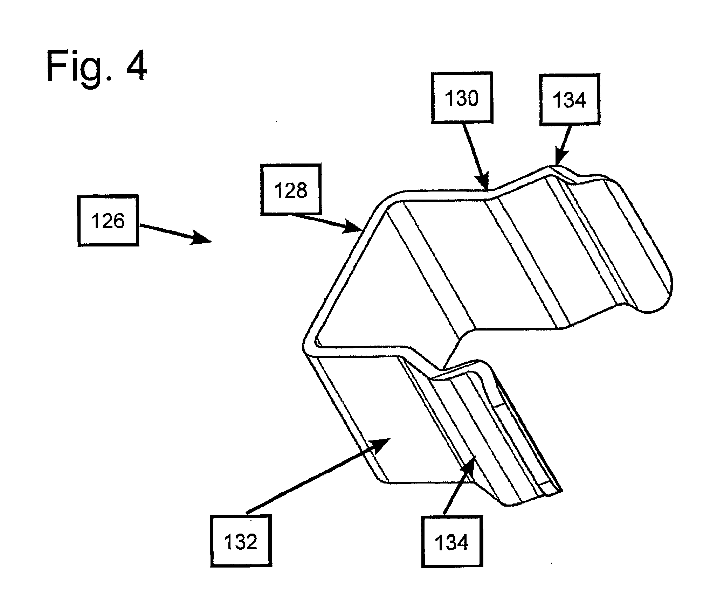

Figur 4 zeigt eine schematische 3D-Darstellung einer Befestigungsklemme 126. Die Klemme ist so ausgebildet, dass sie durch eine Ausnehmung 118 des Stützrahmenelements 114 durchgeführt werden kann und dient zur Herstellung einer Klemmverbindung zwischen dem Stützrahmenelement 114 und der Förderleiste 102. Die Befestigungsklemme 126 weist eine Bodenfläche 128, eine linke Seitenfläche 130, sowie eine rechte Seitenfläche 132 auf. Die Seitenflächen sind jeweils gleichermaßen ausgebildet und weisen eine zunächst senkrecht von der Bodenfläche 128 abstehende Fläche auf. Im oberen Bereich verbreitert sich die Öffnung der Befestigungsklemme 126 zunächst, bevor sie im Anschluss wiederum schmaler wird. Diese Auswölbung 134 dient zur Aufnahme der Förderleiste 102.

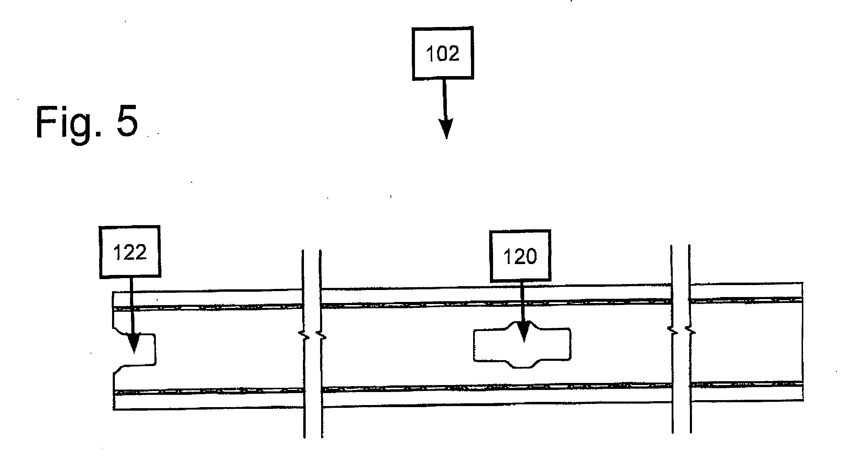

Figur 5 zeigt eine schematische Darstellung einer Draufsicht auf eine Förderleiste 102. Es sind verschiedene Teilstücke der Förderleiste 102 dargestellt, was durch die gezackte Unterbrechung der Förderleiste 102 dargestellt wird. Die Förderleiste 102 weist zwei Ausnehmungen 120 und 122 auf. Die Ausnehmung 122 befindet sich vorzugsweise an der Aufgabeseite des Durchlaufregals und dient zur Befestigung mit Hilfe einer formschlüssigen Verbindung mit einer Lasche an dem Stützrahmenelement. Die Ausnehmung 120 dient zur Aufnahme einer Lasche 116 des Stützrahmenelements 114, damit die Förderleiste 102 flach auf der Auflagefläche des Stützrahmenelements aufliegt und die Laschen 116 nicht zur Auflagefläche gehören.

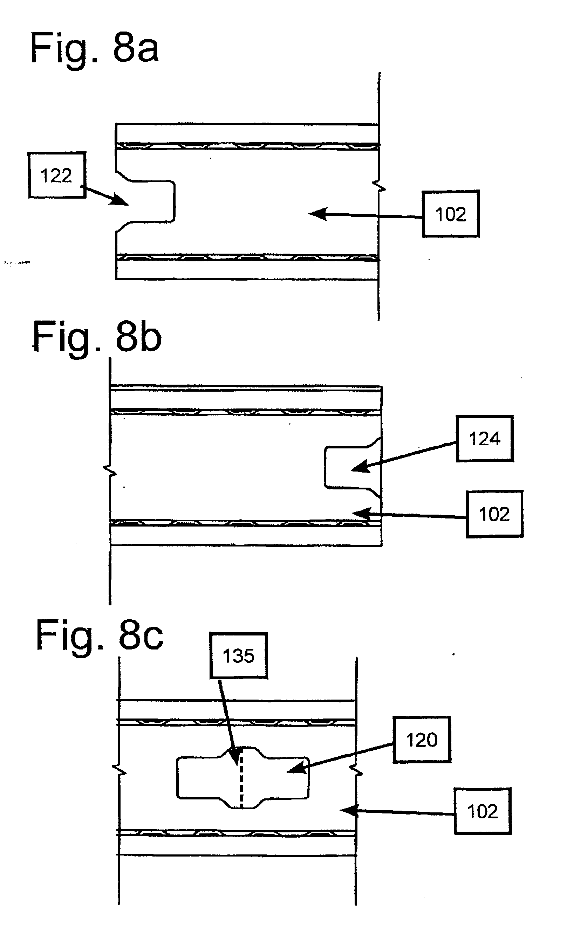

In Figur 5 werden zwei Enden einer Förderleiste dargestellt, wobei das eine Ende die Ausnehmung 122 aufweist und am anderen Ende keine Ausnehmung dargestellt ist. Das Ende mit der Ausnehmung 122 ist dafür ausgebildet mit einer Lasche 116 des Stützrahmenelements 114 eine formschlüssige Verbindung herzustellen. Das Ende mit der Ausnehmung 122 ist daher dazu vorgesehen, das Ende der Förderleiste an der Aufgabeseite des Durchlaufregals zu bilden. Das gegenüberliegende Ende, in dem in Figur 5 keine Ausnehmung dargestellt ist, bildet dementsprechend das Ende an der Entnahmeseite des Durchlaufregals. Es ist also nicht zwingend notwendig, dass sich an der Entnahmeseite eine Ausnehmung in der Förderleiste befindet. In den Figuren 2 und 8 werden andere Ausführungsformen einer Förderleiste mit einer Ausnehmung am Ende an der Entnahmeseite dargestellt.

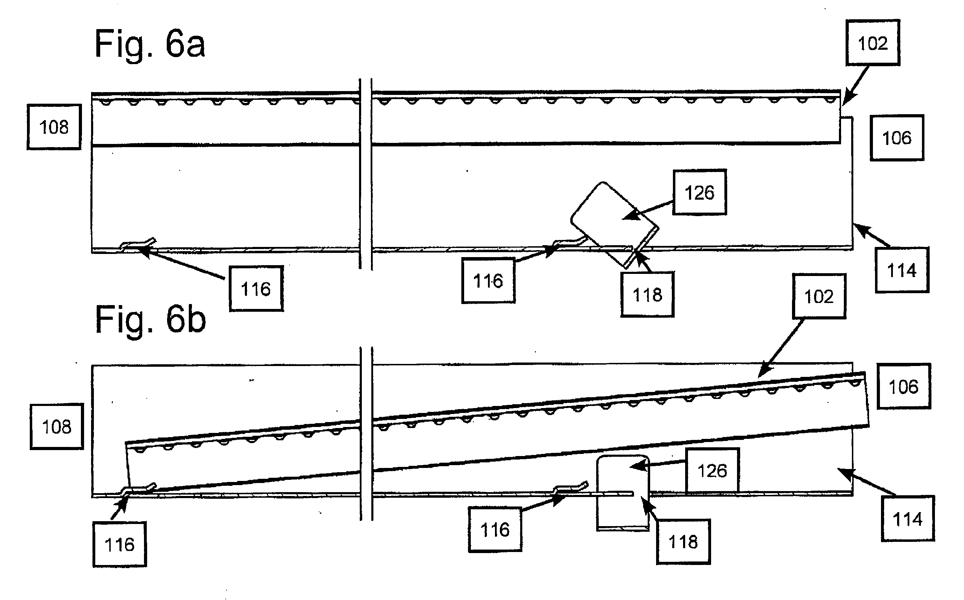

Figur 6a zeigt eine schematische Darstellung einer Förderleiste 102, eines Stützrahmenelements 114 und einer Befestigungsklemme 126 in seitlicher Ansicht. Das Stützrahmenelement 114 ist winkelförmig ausgebildet. Die Befestigungsklemme 126 wird durch die Ausnehmung 118 des Stützrahmenelements 114 durchgeführt. Die Förderleiste 102 befindet sich noch nicht in Kontakt mit dem Stützrahmenelement 114. Das Stützrahmenelement 114 weist ferner zwei Laschen 116 auf.

Figur 6b zeigt eine schematische Darstellung einer Förderleiste 102, eines Stützrahmenelements 114 und einer Befestigungsklemme 126 in seitlicher Ansicht. Die hintere Lasche 116 an der Aufgabeseite 108 greift in eine Ausnehmung an der Förderleiste 102. Die Lasche 116 bildet mit der Ausnehmung in der Förderleiste 102 eine formschlüssige Verbindung. Durch die Unterbrechung in der Figur 6b wird deutlich gemacht, dass hier ein Teil der Förderleiste 102 und des Stützrahmenelements 114 nicht dargestellt werden. Die Befestigungsklemme 126 ist in der Figur 6b in die Ausnehmung 118 eingehängt. Die Förderleiste 102 befindet sich an der Entnahmeseite nicht in Kontakt mit dem Stützrahmenelement 114. Die Befestigung der Förderleiste 102 an der Aufgabeseite 108 mit Hilfe der Lasche 116 und der Ausnehmung an der Förderleiste 102 geschieht dadurch, dass die Förderleiste 102 schräg gehalten wird, wie in der Figur 6b dargestellt, und nach hinten durchgeschoben wird, bis die Lasche 116 eine formschlüssige Verbindung mit der Ausnehmung bildet.

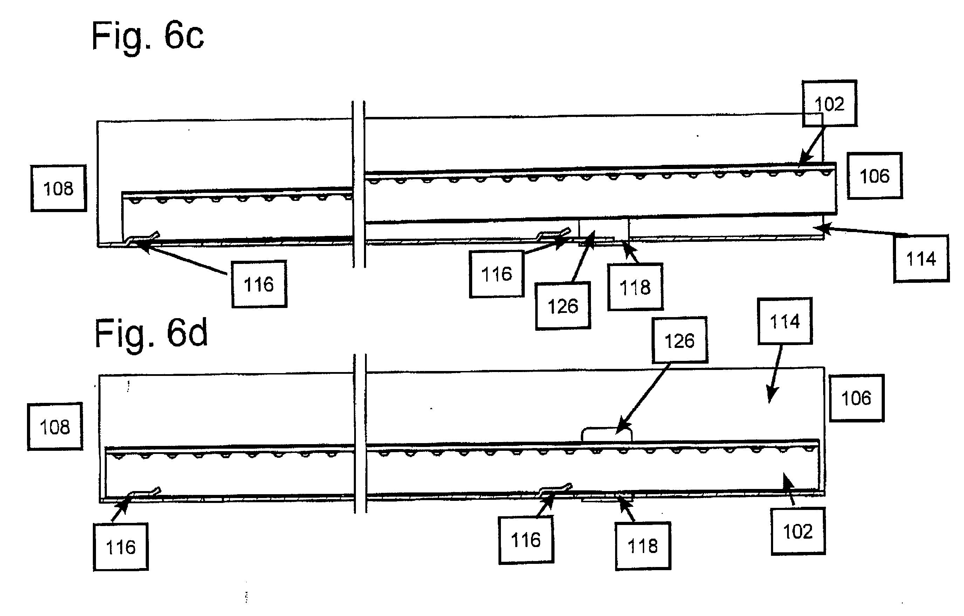

Figur 6c zeigt eine schematische Darstellung einer Förderleiste 102, eines Stützrahmenelements 114 und einer Befestigungsklemme 126 in seitlicher Ansicht. Die Förderleiste 102 ist immer noch durch die Lasche 116 an der Aufgabeseite 108 mit dem Stützrahmenelement 114 verbunden. Die Förderleiste 102 wird in Figur 6c bei der Montage an der Entnahmeseite hinuntergedrückt und in die Befestigungsklemme 126 hineingedrückt.

Figur 6d zeigt die Anordnung aus Figur 6c mit einer vollständig in die Befestigungsklemme 126 eingeklemmten Förderleiste 102. Die Lasche 116 direkt hinter der Ausnehmung 118 greift in eine Ausnehmung in der Förderleiste 102 (in Figur 6d nicht dargestellt). Die Befestigungsklemme 126 verbindet mit einer Klemmverbindung die Förderleiste 102 mit dem Stützrahmenelement 114 an der Entnahmeseite. An der Aufgabeseite 108 bildet die Lasche 116 eine formschlüssige Verbindung mit einer Ausnehmung in der Förderleiste 102 (in Figur 6d nicht dargestellt).

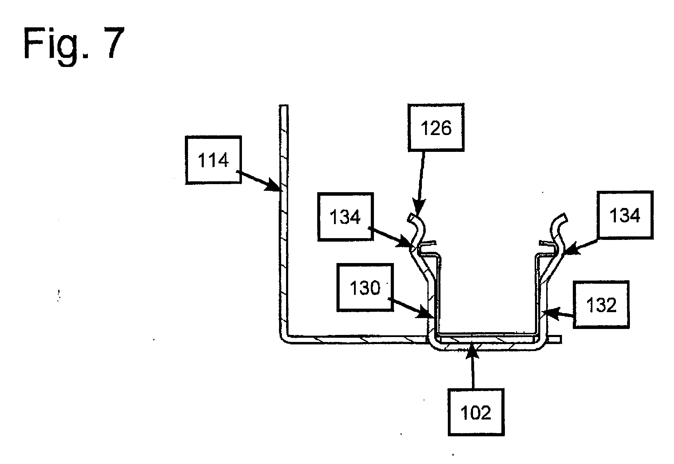

Figur 7 zeigt eine schematische Ansicht des Stützrahmenelements 114, der Befestigungsklemme 126 und der Förderleiste 102 im Querschnitt. Das Stützrahmenelement 114 ist winkelförmig ausgebildet. Die Befestigungsklemme 126 greift durch eine Ausnehmung des Stützrahmenelements 114 (in Figur 7 nicht dargestellt) und stellt eine Klemmverbindung der Förderleiste 102 mit dem Stützrahmenelement 114 her. Die Förderleiste 102 wird von oben in die Befestigungsklemme 126 hineingedrückt und wird in der Ausbeulung 134 der Seitenflächen 130 und 132 der Befestigungsklemme 126 eingeklemmt.

Figur 8a zeigt eine schematische Darstellung eines Teils einer Förderleiste 102 mit einer Ausnehmung 122. Die Ausnehmung 122 dient zur Aufnahme eines Befestigungselements des Stützrahmenelements und bildet an der Aufgabeseite eine formschlüssige Verbindung mit dem Befestigungselement. Die Ausnehmung 122 ist am Ende der Förderleiste 102 angeordnet und verjüngt sich. Die breiteste Stelle der Ausnehmung 122 befindet sich am Ende der Förderleiste 102, sodass das Einführen des Befestigungselements in die Ausnehmung 122 vereinfacht wird.

Figur 8b zeigt eine schematische Darstellung eines Teils einer Förderleiste 102 mit einer Ausnehmung 124. Die Form der Ausnehmung 124 ergibt sich aus einer Spielung der Form der Ausnehmung 122 in Figur 8a. Die Ausnehmung 124 ist vorzugsweise an der Entnahmeseite des Durchlaufregals angeordnet. Im Gegensatz zu Figur 5 weist also die Förderleiste in Figur 8b am Ende an der Entnahmeseite eine Ausnehmung 124 auf. Dies ist vorteilhaft, da so keinerlei Verschnitt bei der Herstellung der Förderleisten entsteht, da bei einem Förderleisten-Endlosprofil das Ende an der Entnahmeseite einer ersten Förderleiste sich direkt an das Ende an der Aufgabeseite einer zweiten Förderleiste nahtlos anschließt. Beim Herausschneiden der Förderleisten aus dem Förderleisten-Endlosprofil entsteht also kein Verschnitt, der nicht für eine Förderleiste genutzt werden könnte.

Figur 8c zeigt eine schematische Darstellung eines Teils einer Förderleiste 102 mit einer Ausnehmung 120. Die Form der Ausnehmung 120 ergibt sich aus den Formen der Ausnehmungen 122 in Figur 8a und 124 in Figur 8b. Um die Form der Ausnehmung 120 zu erhalten, müssen die beiden Formen der Ausnehmungen 122 und 124 mit ihrer jeweils breitesten Stelle aneinandergeführt werden. Die Ausnehmung 120 hat also ihre breiteste Stelle in der Mitte. Die Ausnehmung 120 ist doppelt so lang wie die Ausnehmungen 122 und 124.

Mit anderen Worten erhält man die Form der Ausnehmung 120, indem man die Form der Ausnehmung 122 an der Spiegelachse 135 spiegelt und die Form der Ausnehmung 122 mit der gespiegelten Form in Berührung bringt. Eine Spiegelung der Form der Ausnehmung 124 an der Spiegelachse 135 ist ebenfalls möglich. In dem Fall müssen wieder die gespiegelte Form und die ursprüngliche Form an ihrer jeweils breitesten Stelle miteinander in Berührung gebracht werden.

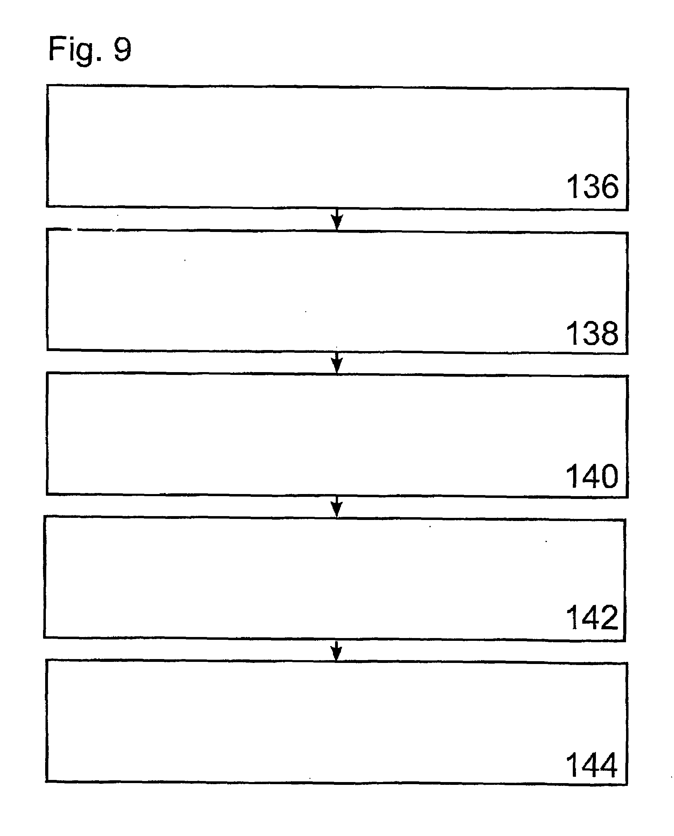

Figur 9 zeigt ein Blockdiagramm eines Verfahrens zur Montage einer erfindungsgemäßen Förderleiste in ein erfindungsgemäßes Durchlaufregal. Die gesamte Montage wird bei einem bereits aufgebauten Regal ausschließlich von der Entnahmeseite aus durchgeführt. Zunächst wird eine Befestigungsklemme an der Entnahmeseite durch eine Ausnehmung des Stützrahmenelements durchgeführt und eingehängt 136.

Im nächsten Schritt 138 wird die Förderleiste auf das Stützrahmenelement aufgelegt.

Das Durchschieben der Förderleiste auf dem Stützrahmenelement bis zur Aufgabeseite erfolgt in Schritt 140.

Wenn die Förderleiste bis zur Aufgabeseite durchgeschoben wurde, wird die Lasche des Stützrahmenelements an der Aufgabeseite in die Ausnehmung der Förderleiste eingeführt 142. Hierbei ist es hilfreich, wenn die Ausnehmung verjüngend ausgebildet ist, da die Lasche dann einfacher eingeführt werden kann.

Wenn die Lasche des Stützrahmenelements in die Ausnehmung der Förderleiste eingeführt ist, wird die Förderleiste von der Entnahmeseite aus nach unten gedrückt und in die Befestigungsklemme eingeklemmt 144. Nun liegt die Förderleiste festgeklemmt auf der Auflagefläche des Stützrahmenelements. Gegebenenfalls können bei langen Förderleisten - z.B. ab 2m Länge - auch mehrere Befestigungsklemmen verwendet werden. Mehrere Laschen des Stützrahmenelements greifen in Ausnehmungen der Förderleiste. Eine Ausnehmung ist jeweils für die Aufnahme einer Lasche ausgebildet. An der Entnahmeseite wird ein Herausrutschen der Förderleiste durch eine Entnahmekante verhindert, die auch das Herausfallen von Stückgütern verhindert.

### Bezugszeichenliste

- 100: Durchlaufregal
- 102: Förderleiste
- 104: Stützrahmen
- 106: Entnahmeseite
- 108: Aufgabeseite
- 110: Bühne
- 112: automatische Zuführung
- 114: Stützrahmenelement
- 115: Person
- 116: Lasche
- 117: Entnahmekante
- 118: Ausnehmung
- 120: Ausnehmung
- 122: Ausnehmung
- 124: Ausnehmung
- 126: Befestigungsklemme
- 128: Bodenfläche
- 130: Seitenfläche
- 132: Seitenfläche
- 134: Auswölbung
- 135: Spiegelachse
- 136: Einhängen der Befestigungsklemme
- 138: Auflegen der Förderleiste
- 140: Durchschieben der Förderleiste
- 142: Einführen der Lasche in Ausnehmung
- 144: Einklemmen der Förderleiste

## Patentansprüche

1. Durchlaufregal (100) mit einem Stützrahmen (104) zur Befestigung von Förderleisten (102), wobei der Stützrahmen ein von einer Aufgabeseite (108) zu einer Entnahmeseite (106) verlaufendes Stützrahmenelement (114) aufweist, wobei das Stützrahmenelement an der Aufgabeseite (108) ein erstes Befestigungselement (116) aufweist, wobei das erste Befestigungselement (116) zur Ausbildung einer formschlüssigen Verbindung mit einer der Förderleisten (102) ausgebildet ist, und mit einem zweiten Befestigungselement (126) zur Ausbildung einer Klemmverbindung an der Entnahmeseite (106) zwischen dem Stützrahmenelement (114) und der Förderleiste (102), wobei die Fördeneiste (102) eine erste Ausnehmung (122) an der Aufgabeseite (108) aufweist und das erste Befestigungselement (116) eine erste Lasche ist und zum Eingriff in die erste Ausnehmung (122) ausgebildet ist, wobei das Stützrahmenelement (114) zumindest eine zweite Lasche aufweist, wobei das Stützrahmenelement (114) zumindest eine zweite Ausnehmung (118) an der Entnahmeseite (106) zur Aufnahme zumindest der zumindest einen zweiten Lasche aufweist, wobei
- die Laschen äquidistant angeordnet sind;
- jede Lasche von einer Auflagefläche des Stützrahmenelements (114) absteht;
- zumindest eine dritte Ausnehmung (120) in der Förderleiste (102) angeordnet ist, wobei in Montageposition die zweite Lasche in die dritte Ausnehmung (120) ragt,
- die dritte Ausnehmung (120) eine Form hat, die sich aus der Form der ersten Ausnehmung (122) und der gespiegelten Form der ersten Ausnehmung (122) ergibt.

2. Durchlaufregal nach Anspruch 1, wobei das Stützrahmenelement (114) winkelförmig ausgebildet ist.

3. Durchlaufregal nach einem der vorhergehenden Ansprüche, wobei die erste Ausnehmung (122) einen vorderen Bereich aufweist, der in Richtung von der Aufgabeseite (108) zur Entnahmeseite (106) verjüngend ausgebildet ist, und das erste Befestigungselement (116) als eine Lasche ausgebildet ist.

4. Durchlaufregal nach Anspruch 3, wobei das zweite Befestigungselement (126) eine Befestigungsklemme ist.

5. Durchlaufregal nach einem der vorhergehenden Ansprüche, wobei an der Entnahmeseite (106) eine begehbare Bühne (110) angeordnet ist.

6. Durchlaufregal nach einem der vorhergehenden Ansprüche, wobei eine automatische Zuführung (112) an der Aufgabeseite (108) angeordnet ist.

7. Durchlaufregal nach einem der vorhergehenden Ansprüche, wobei das Durchlaufregal (100) für eine Handbeschickung ausgebildet ist.

8. Durchlaufregal nach einem der vorhergehenden Ansprüche, wobei die Ausnehmungen (118,120,121) und Befestigungselemente (116,126) der Förderleisten (102) und Stützrahmenelemente (114) ausgestanzt wurden.

9. Durchlaufregal nach einem der vorhergehenden Ansprüche, wobei die erste Ausnehmung (122) und das erste Befestigungselement (116) in einem Bereich von 5 bis 40mm vor dem Ende des Durchlaufregals (100) an der Aufgabeseite (108) angeordnet sind.

10. Durchlaufregal nach einem der vorhergehenden Ansprüche, wobei die zweite Ausnehmung (118) und das zweite Befestigungselement (126) in einem Bereich von 5 bis 300mm vor dem Ende des Durchlaufregals (100) an der Entnahmeseite (106) angeordnet sind.

11. Durchlaufregal nach einem der vorhergehenden Ansprüche, wobei zwischen Entnahmeseite (106) und Aufgabeseite (108) zumindest eine weitere Befestigungsklemme zur Befestigung der Förderleiste (102) am Stützrahmenelement (114) angeordnet ist.

12. Durchlaufregal nach einem der vorherigen Ansprüche, wobei die Förderleiste (102) eine Rollenleiste ist.

13. Durchlaufregal nach einem der vorhergehenden Ansprüche, wobei die Förderleiste (102) eine Rutschschiene ist.

14. Durchlaufregal nach einem der vorhergehenden Anspruche, wobei die Förderleiste (102) ein Förderband und/oder Zahnräder aufweist.

15. Verfahren zur Herstellung einer Förderleiste (102) und eines Stützrahmens (114) für ein Durchlaufregal (100) nach einem der Ansprüche 1-14, wobei das Verfahren die folgenden Schritte umfasst:
- Ausstanzen von äquidistanten dritten Ausnehmungen (120) in ein Förderleistenendlosprofil;
- Ausstanzen von ebenso äquidistanten zweiten Ausnehmungen (118) und ersten Befestigungselementen (116) in ein Stützrahmenelementendlosprofil; und
- Zuschneiden der Endlosprofile auf die gewünschte Länge, wobei eine dritte Ausnehmung (120) des Förderleistenendlosprofils an der Aufgabeseite (108) beim Zuschneiden in der Mitte geteilt wird, sodass eine erste Ausnehmung (122) entsteht.

## Claims

1. Storage rack (100) with a support frame (104) for fixing feed bars (102), wherein the support frame has a support frame element (114) running from a charging side (108) to a removal side (106), wherein the support frame element has a first fastening element (116) on the charging side (108), wherein the first fastening element (116) is designed for forming an interlocking connection to one of the feed bars (102), and with a second fastening element (126) for forming a clamping connection on the removal side (106) between the support frame element (114) and the feed bar (102), wherein the feed bar (102) has a first recess (122) on the charging side (108) and the first fastening element (116) is a first clip and is designed for engagement in the first recess (122), wherein the support frame element (114) has at least one second clip, wherein the support frame element (114) has at least one second recess (118) on the removal side (106) for receiving at least the at least one second clip, wherein
- the clips are arranged equidistantly;
- each clip protrudes from the bearing surface of the support frame element (114),
- at least one third recess (120) is arranged in the feed bar (102), wherein, in the installed position, the second clip protrudes into the third recess (120),
- the third recess (120) has a shape which arises from the shape of the first recess (122) and the reflected shape of the first recess (122).

2. Storage rack according to Claim 1, wherein the support frame element (114) is of angular design.

3. Storage rack according to either of the preceding claims, wherein the first recess (122) has a front region which is designed so as to taper in the direction from the charging side (108) to the removal side (106), and the first fastening element (116) is designed as a clip.

4. Storage rack according to Claim 3, wherein the second fastening element (126) is a fastening clamp.

5. Storage rack according to one of the preceding claims, wherein a platform (110) which can be walked on is arranged on the removal side (106).

6. Storage rack according to one of the preceding claims, wherein an automatic supplying means (112) is arranged on the charging side (108).

7. Storage rack according to one of the preceding claims, wherein the storage rack (100) is designed for manual loading.

8. Storage rack according to one of the preceding claims, wherein the recesses (118, 120, 122) and fastening elements (116, 126) of the feed bars (102) and support frame elements (114) have been punched out.

9. Storage rack according to one of the preceding claims, wherein the first recess (122) and the first fastening element (116) are arranged within a range of from 5 to 40 mm before the end of the storage rack (100) on the charging side (108).

10. Storage rack according to one of the preceding claims, wherein the second recess (118) and the second fastening element (126) are arranged within a range of from 5 to 300 mm before the end of the storage rack (100) on the removal side (106).

11. Storage rack according to one of the preceding claims, wherein at least one further fastening clamp for fastening the feed bar (102) to the support frame element (114) is arranged between the removal side (106) and charging side (108).

12. Storage rack according to one of the preceding claims, wherein the feed bar (102) is a roller bar.

13. Storage rack according to one of the preceding claims, wherein the feed bar (102) is a slide rail.

14. Storage rack according to one of the preceding claims, wherein the feed bar (102) has a conveyor belt and/or gearwheels.

15. Method for producing a feed bar (102) and a support frame (114) for a storage rack (100) according to one of Claims 1-14, wherein the method comprises the following steps:
- punching out equidistant third recesses (120) into a feed bar endless profile;
- punching out likewise equidistant second recesses (118) and first fastening elements (116) into a support frame element endless profile; and
- cutting the endless profiles to the desired length, wherein a third recess (120) of the feed bar endless profile on the charging side (108) is divided in the centre during the cutting operation, thus producing a first recess (122).

## Revendications

1. Etagère (100) avec une structure porteuse (104) pour la fixation de baguettes de transport (102), dans laquelle la structure porteuse présente un élément de structure porteuse (114) s'étendant d'un côté de dépôt (108) à un côté d'enlèvement (106), dans laquelle l'élément de structure porteuse présente un premier élément de fixation (116) sur le côté de dépôt (108), dans lequel le premier élément de fixation (116) est configuré de façon à réaliser un assemblage par emboîtement avec une des baguettes de transport (102), et avec un deuxième élément de fixation (126) destiné à former un assemblage par serrage, sur le côté d'enlèvement (106), entre l'élément de structure porteuse (114) et la baguette de transport (102), dans laquelle la baguette de transport (102) présente une première découpe (122) sur le côté de dépôt (108) et le premier élément de fixation (116) est une première patte et est configuré de façon à s'engager dans le premier découpe (122), dans lequel l'élément de structure porteuse (114) présente au moins une deuxième patte, dans lequel l'élément de structure porteuse (114) présente au moins une deuxième découpe (118) sur le côté d'enlèvement (106) destinée à recevoir au moins ladite au moins une deuxième patte, dans laquelle
- les pattes sont disposées de manière équidistante;
- chaque patte est dressée sur une face d'appui de l'élément de structure porteuse (114);
- au moins une troisième découpe (120) est disposée dans la baguette de transport (102), dans laquelle la deuxième patte pénètre dans la troisième découpe (120) dans la position de montage;
- la troisième découpe (120) a une forme qui résulte de la forme de la première découpe (122) et de la forme réfléchie de la première découpe (122).

2. Etagère selon la revendication 1, dans laquelle l'élément de structure porteuse (114) est réalisé en forme de cornière.

3. Etagère selon l'une quelconque des revendications précédentes, dans laquelle la première découpe (122) présente une région antérieure, qui va en se rétrécissant dans la direction du côté de dépôt (108) vers le côté d'enlèvement (106), et le premier élément de fixation (116) est réalisé en forme de patte.

4. Etagère selon la revendication 3, dans laquelle le deuxième élément de fixation (126) est une pince de fixation.

5. Etagère selon l'une quelconque des revendications précédentes, dans laquelle une plate-forme praticable (110) est disposée sur le côté d'enlèvement (106).

6. Etagère selon l'une quelconque des revendications précédentes, dans laquelle une alimentation automatique (112) est disposée sur le côté de dépôt (108).

7. Etagère selon l'une quelconque des revendications précédentes, dans laquelle l'étagère (100) est conçue pour un chargement manuel.

8. Etagère selon l'une quelconque des revendications précédentes, dans laquelle les découpes (118, 120, 122) et les éléments de fixation (116, 126) des baguettes de transport (102) et des éléments de structure porteuse (114) sont estampés.

9. Etagère selon l'une quelconque des revendications précédentes, dans laquelle la première découpe (122) et le premier élément de fixation (116) sont disposés dans une région de 5 à 40 mm avant l'extrémité de l'étagère (100) sur le côté de dépôt (108).

10. Etagère selon l'une quelconque des revendications précédentes, dans laquelle la deuxième découpe (118) et le deuxième élément de fixation (126) sont disposés dans une région de 5 à 300 mm avant l'extrémité de l'étagère (100) sur le côté d'enlèvement (106).

11. Etagère selon l'une quelconque des revendications précédentes, dans laquelle au moins une autre pince de fixation est disposée entre le côté d'enlèvement (106) et le côté de dépôt (108) pour la fixation de la baguette de transport (102) à l'élément de structure porteuse (114).

12. Etagère selon l'une quelconque des revendications précédentes, dans laquelle la baguette de transport (102) est une baguette de roulement.

13. Etagère selon l'une quelconque des revendications précédentes, dans laquelle la baguette de transport (102) est un rail de glissement.

14. Etagère selon l'une quelconque des revendications précédentes, dans laquelle la baguette de transport (102) présente une bande transporteuse et/ou des roues dentées.

15. Procédé de fabrication d'une baguette de transport (102) et d'une structure porteuse (114) pour une étagère (100) selon l'une quelconque des revendications 1 à 14, dans lequel le procédé comprend les étapes suivantes:
- estampage de troisièmes découpes équidistantes (120) dans un profilé sans fin de baguette de transport;
- estampage de deuxièmes découpes (118) et de premiers éléments de fixation (116) également équidistants dans un profilé sans fin de structure porteuse; et
- coupe des profilés sans fin à la longueur désirée, dans lequel une troisième découpe (120) du profilé sans fin de baguette de transport est coupée au milieu sur le côté de dépôt (108) lors de la coupe, de telle manière qu'il apparaisse une première découpe (122).
